# EUROPEAN PATENT APPLICATION

(11) **EP 2 687 374 A1**
(43) Date of publication of application: **22.01.2014**
(21) Application number: 12756922.6
(22) Date of filing: 07.03.2012
(51) Int. Cl.: B32B 27/36, B32B 27/00, C09J 7/02, C09K 3/00

(54) **RELEASE LINER**

(30) Priority: 14.03.2011 JP 2011055153
(71) Applicant: Nitto Denko Corporation, Osaka 567-8680 (JP)
(72) Inventor: YOSHIE, Satomi, Ibaraki-shi, Osaka 567-8680 (JP); TAKAHIRA, Hitoshi, Ibaraki-shi, Osaka 567-8680 (JP)
(74) Representative: Grünecker, Kinkeldey, Stockmair & Schwanhäusser
(86) International application number: PCT/JP2012/055823
(87) International publication number: WO 2012/124566

(57) **Abstract**

Provided is a release liner which includes a substrate derived from a poly(lactic acid), a biomass-derived plastic; and a releasable cured layer derived from a release agent. The releasable cured layer, even when employing an ultraviolet-curable silicone release agent as the release agent, is satisfactorily curable and exhibits good adhesion to the substrate. The release liner according to the present invention includes a poly(lactic acid) substrate; a release-treated layer present over at least one side of the substrate; and an undercoat layer lying between them. The undercoat layer is present in a mass of coating of typically from 0.1 to 5 g/m² in solids content. The poly(lactic acid) substrate may contain a modifier. The release agent forming the release-treated layer may be an ultraviolet-curable silicone release agent. The ultraviolet-curable silicone release agent is preferably a cationically polymerizable ultraviolet-curable silicone release agent.

## Description

### Technical Field

The present invention relates to release liners. More specifically, the present invention relates to release liners (separators) each including a poly(lactic acid) film or sheet as a substrate. The release liners are used typically as release films in adhesive face protection of pressure-sensitive adhesive tapes, pressure-sensitive adhesive sheets, labels, and other articles; and as mold releasing films.

### Background Art

Release liners are sheets including a substrate and a releasing layer arranged on the substrate. The substrate generally widely employs a resin film derived from any of resins such as polyethylenes, polypropylenes, and poly(ethylene terephthalate)s.

Biomass-derived plastics have recently been received attention for the global environmental protection. The biomass-derived plastics are plastics prepared from plant-derived materials. They can serve as carbon-neutral materials in terms of carbon dioxide release and are environmentally friendly, unlike plastics prepared from petroleum-derived materials. Poly(lactic acid)s are now available in large amounts as biomass-derived plastics. Suppose that a customary thermosetting silicone release agent is applied to a poly(lactic acid) substrate and thermally cured to form a releasable cured layer silicone. The poly(lactic acid) substrate in this case, however, readily thermally shrinks and deforms because such a poly(lactic acid) generally has insufficient thermal stability. This impedes current use of poly(lactic acid)s as substrates in release liners.

Paper is exemplified as another biomass material. Known release liners using the paper include a release liner disclosed in Patent Literature (PTL) 1. This release liner includes a paper substrate, a silicone layer (release agent layer) lying over the substrate, and a clay coating layer lying between the substrate and the silicone layer. The release liner, however, is useable only in limited applications because of employing, as the substrate, paper that lacks transparency. The release liner is difficult to use in a clean environment because dust (paper powder) derived from the paper flies upon the production of the paper substrate and the production of the release liner using this.

### Citation List

### Patent Literature

PTL 1: Japanese Unexamined Patent Application Publication (JP-A) No. 2001-40301

### Summary of Invention

### Technical Problem

The poly(lactic acid)s are poorly thermally stable and disadvantageously deform due to heat applied upon the formation of a release agent layer using a customary thermosetting silicone release agent, as described above. A possible solution to prevent the disadvantage is the use of an ultraviolet-curable silicone release agent to form a releasable cured layer silicone. In this case, however, a curing-inhibiting component (e.g., a surfactant) contained in the base resin of the poly(lactic acid) substrate prevents sufficient curing of the ultraviolet-curable silicone release agent. This impedes the formation of a releasable cured layer on the poly(lactic acid) substrate, which releasable cured layer has satisfactory adhesion to the substrate.

Accordingly, an object of the present invention is to provide a release liner as follows. The release liner includes a substrate and a releasable cured layer, in which a poly(lactic acid), a biomass-derived plastic, is employed as a material to form the substrate. Even when the release liner employs an ultraviolet-curable silicone release agent as a release agent to form the releasable cured layer, the silicone release agent is satisfactorily cured to allow the resulting releasable cured layer to have good adhesion to the substrate.

### Solution to Problem

After intensive investigations to achieve the object, the present inventors have found that the presence of an undercoat layer between a poly(lactic acid) substrate and a release-treated layer allows even an ultraviolet-curable silicone release agent to be used as a release agent and to be cured satisfactorily. This gives a releasable cured layer with satisfactory adhesion to the substrate. The present invention has been made based on these findings.

Specifically, the present invention provides a release liner including a poly(lactic acid) substrate; a release-treated layer lying over at least one side of the substrate; and an undercoat layer lying between the release-treated layer and the substrate.

The undercoat layer may be present in a mass of coating of typically 0.1 to 5 g/m² in terms of solids content.

The poly(lactic acid) substrate may contain a modifier.

An ultraviolet-curable silicone release agent may be used as a release agent to form the release-treated layer. The ultraviolet-curable silicone release agent is preferably a cationically polymerizable ultraviolet-curable silicone release agent.

The undercoat layer may be a polyester resin layer. Advantageous Effects of Invention

The release liner according to an embodiment of the present invention includes a poly(lactic acid) substrate, a release-treated layer lying over at least one side of the substrate, and an undercoat layer lying between the substrate and the release-treated layer. Even when the release liner employs an ultraviolet-curable silicone release agent as a release agent to form the release-treated layer, the release-treated layer has satisfactory adhesion to the substrate with less or no curing inhibition caused by a component contained in the poly(lactic acid) substrate. The poly(lactic acid) substrate, when containing a modifier, can have properties such as tear resistance, thermal stability, and slipperiness at higher levels while maintaining rigidity inherent to the poly(lactic acid) substrate. This allows the release liner to be satisfactorily usable in various applications and to be highly useful.

### Description of Embodiments

### Poly(lactic acid) Substrate

The release liner according to the present invention employs a biomass-derived plastic poly(lactic acid) as a resin to form a substrate. Lactic acid is used as a material monomer to form the poly(lactic acid). Lactic acid has an asymmetric carbon atom and includes two optical isomers, i.e., L- and D-isomers. The poly(lactic acid) for use in the present invention is a polymer mainly derived from L-lactic acid. A material lactic acid preferably has an L-purity as high as possible and more preferably has an L-purity of 95% or more. This is because a material lactic acid containing D-lactic acid in a lower content gives a polymer having a higher crystallinity and a higher melting point. The D-lactic acid is contaminated as an impurity upon production. The poly(lactic acid) may further include one or more other copolymerizable components than lactic acid.

The other copolymerizable components are exemplified by polyol compounds such as ethylene glycol, propylene glycol, 1,3-propanediol, butanediol, pentanediol, neopentyl glycol, hexanediol, heptanediol, octanediol, nonanediol, decanediol, 1,4-cyclohexanedimethanol, glycerol, pentaerythritol, polyethylene glycols, polypropylene glycols, polytetramethylene glycols, and bisphenol-A; polycarboxylic acids such as oxalic acid, malonic acid, glutaric acid, adipic acid, sebacic acid, azelaic acid, dodecanedioic acid, cyclohexanedicarboxylic acid, terephthalic acid, isophthalic acid, phthalic acid, naphthalenedicarboxylic acid, bis(p-carboxyphenyl)methane, anthracenedicarboxylic acid, 4,4'-diphenyl ether dicarboxylic acid, 5-(sodiosulfo)isophthalic acid, and 5-tetrabutylphosphonium isophthalic acid; hydroxycarboxylic acids such as glycolic acid, hydroxypropionic acid, hydroxybutyric acid, hydroxyvaleric acid, hydroxycaproic acid, and hydroxybenzoic acid; and lactones such as propiolactone, valerolactone, caprolactone, undecalactone, and 1,5-dioxepan-2-one. These copolymerizable components may be used in an amount of preferably from 0 to 30 mole percent and more preferably from 0 to 10 mole percent of entire monomer components constituting the poly(lactic acid) (A).

The poly(lactic acid) may have a weight-average molecular weight of typically from 1x 10⁴ to 40x 10⁴, preferably from 5x 10⁴ to 30x 10⁴, and more preferably from 8x 10⁴ to 15x 10⁴. The poly(lactic acid) may have a melt flow rate of typically from 0.1 to 50 g/10 min, preferably from 0.2 to 20 g/10 min, more preferably from 0.5 to 10 g/10 min, and particularly preferably from 1 to 7 g/10 min. The melt flow rate is measured at 190°C under a load of 21.2 N according to Test Condition 4 prescribed in JIS K-7210. A poly(lactic acid) having an excessively high melt flow rate may form a film or sheet that is insufficient in mechanical properties and/or thermal stability. A poly(lactic acid) having an excessively low melt flow rate may overload film formation.

As used herein the term "weight-average molecular weight" refers to a value as measured by gel permeation chromatography (GPC) in terms of a polystyrene standard. The GPC measurement is performed under conditions as follows.
Columns: TSKgel SuperHZMH/HZ2000/HZ1000
Column size: 4.6 mm in inner diameter by 150 mm in length
Eluting solvent: Chloroform
Flow rate: 0.3 ml/min
Detector: RI
Column temperature: 40°C
Injection volume: 10 µl

The poly(lactic acid) may be produced by a process which is represented by, but not limited to, a lactide process and a direct polymerization process. The lactide process is performed as follows. Lactic acid is dehydrated and condensed with heating to give a low-molecular-weight poly(lactic acid), and this is thermally decomposed under reduced pressure to give lactide as a cyclic dimer of lactic acid. The lactide is subjected to ring-opening polymerization in the presence of a metal salt catalyst (e.g., tin(II) octanoate) and yields a high-molecular-weight poly(lactic acid). The direct polymerization process is performed as follows. Lactic acid is heated under reduced pressure in a solvent (e.g., diphenyl ether), thus polymerized while removing water to suppress hydrolysis, and directly yields a poly(lactic acid).

The poly(lactic acid) may be available as a commercial product. The commercial product is exemplified by those available under the trade names "LACEA H-400" and "LACEA H-100" (each from Mitsui Chemicals Inc.); and the trade names "TERRAMAC TP-4000" and "TERRAMAC TE-4000" (each from UNITIKA LTD.). Naturally, the poly(lactic acid) may also be one prepared by a known or customary polymerization process such as emulsion polymerization or solution polymerization.

For a higher biomass ratio, the poly(lactic acid) substrate may contain the poly(lactic acid) in a content of generally 60 percent by weight or more, preferably 70 percent by weight or more, more preferably 80 percent by weight or more, and particularly preferably 85 percent by weight or more. The poly(lactic acid) content is typically 97 percent by weight or less, preferably 95 percent by weight or less, and more preferably 93 percent by weight in terms of its upper limit. As used herein the term "biomass ratio" refers to a ratio of the dry weight of used biomass to the dry weight of the poly(lactic acid) film or sheet. The term "biomass" refers to a renewable biological organic resource other than fossil resources.

The poly(lactic acid) substrate herein may further contain a modifier and/or an additive for better properties of the substrate, in addition to the poly(lactic acid) base polymer.

The modifier is exemplified by a tear-resistance improver, a crystallization promoter, and a lubricant to give roll lubricity. A tear-resistance improver, when contained in the poly(lactic acid) substrate, contributes to better tear strength of the substrate (and of the release liner). A crystallization promoter, when contained in the poly(lactic acid) substrate, contributes to better thermal stability of the substrate (and of the release liner). A lubricant, when contained in the poly(lactic acid) substrate to give roll lubricity thereto, serves as follows. Typically, when the poly(lactic acid) substrate is prepared by calendering film formation, a molten poly(lactic acid)-containing composition is passed through a gap between metal rolls to form a film or sheet. The lubricant allows the film or sheet to be easily peeled off from metal rolls and to be formed smoothly.

The tear-resistance improver is exemplified by (a) a polyglycerol fatty acid ester or polyglycerol-condensed hydroxy fatty acid ester; (b) a core-shell polymer including a particulate rubber and a graft layer lying outside the particulate rubber; and (c) a flexible aliphatic polyester. Each of them may be used alone or in combination.

Of the polyglycerol fatty acid ester or polyglycerol-condensed hydroxy fatty acid ester (a), the polyglycerol fatty acid ester is obtained by reacting a polyglycerol with a fatty acid. The polyglycerol as one component to form the polyglycerol fatty acid ester is exemplified by diglycerol, triglycerol, tetraglycerol, pentaglycerol, hexaglycerol, heptaglycerol, octaglycerol, nonaglycerol, decaglycerol, and dodecaglycerol. Each of them may be used alone or in combination as a mixture. The polyglycerol preferably has an average polymerization degree of from 2 to 10.

The fatty acid as the other component to form the polyglycerol fatty acid ester is exemplified by fatty acids having 12 or more carbon atoms. Examples of the fatty acids include lauric acid, myristic acid, palmitic acid, stearic acid, oleic acid, linoleic acid, linolenic acid, eicosadienoic acid, arachidonic acid, behenic acid, ricinoleic acid, 12-hydroxystearic acid, and hydrogenated castor oil fatty acids. Each of them may be used alone or in combination as a mixture.

The polyglycerol-condensed hydroxy fatty acid ester is obtained by reacting a polyglycerol with a condensed hydroxy fatty acid. The polyglycerol as one component to form the polyglycerol-condensed hydroxy fatty acid ester is as with those exemplified as the component to form the polyglycerol fatty acid ester.

The condensed hydroxy fatty acid serving as the other component to form the polyglycerol-condensed hydroxy fatty acid ester is a condensate of a hydroxy fatty acid. The hydroxy fatty acid may be any fatty acid, as long as having at least one hydroxyl group per molecule, and is exemplified by ricinoleic acid, 12-hydroxystearic acid, and hydrogenated castor oil fatty acids. The condensed hydroxy acid may have a degree of condensation of typically 3 or more and preferably from 3 to 8. Each of different condensed hydroxy fatty acids may be used alone or in combination as a mixture.

The polyglycerol fatty acid ester or the polyglycerol-condensed hydroxy fatty acid ester may be available as a commercial product. Exemplary commercial products for use as the polyglycerol fatty acid ester include those available under the trade names "CHIRABASOL VR-10", "CHIRABASOL VR-2", and other CHIRABASOL series from Taiyo Kagaku Corporation.

In the core-shell polymer (b) including a particulate rubber and a graft layer lying outside the particulate rubber, the particulate rubber (rubber particles) constitutes a core; and the graft polymer constitutes a shell. The particulate rubber constituting the core is exemplified by acrylic rubbers, butadiene-based rubbers, and silicone/acrylic composite rubbers. The polymer constituting the shell is exemplified by styrenic resins such as polystyrenes; and acrylic resins such as poly(methyl methacrylate)s.

The core-shell polymer has an average diameter of particles (aggregates of primary particles) of typically from 50 to 500 µm and preferably from 100 to 250 µm. This core-shell polymer, when mixed with the poly(lactic acid) (A) and subjected to melting and kneading, disperses as primary particles. The primary particles have an average particle diameter of typically from 0.1 to 0.6 µm.

The core-shell polymer may be available as a commercial product. Exemplary commercial products for use as the core-shell polymer include those available under the trade names "PARALOID EXL2315" and other PARALOID series (of which PARALOID EXL series are preferred) from Rohm and Haas Japan K.K.; and the trade names "METABLEN S-2001" and other METABLEN S types, "METABLEN W-450A" and other METABLEN W types, "METABLEN C-223A" and other METABLEN C types, and "METABLEN E-901" and other METABLEN E types, each from Mitsubishi Rayon Co., Ltd.

The flexible aliphatic polyester (c) includes aliphatic polyesters and aliphatic-aromatic copolyesters. The flexible aliphatic polyester (c) (aliphatic polyester and/or aliphatic-aromatic copolyester) includes a polyester obtained from a polyhydric alcohol (e.g., a diol) and a polycarboxylic acid (e.g., a dicarboxylic acid) and employing at least an aliphatic diol as the diol, and at least an aliphatic dicarboxylic acid as the dicarboxylic acid; and a polymer of an aliphatic hydroxycarboxylic acid having 4 or more carbon atoms. The aliphatic diol is exemplified by aliphatic diols (including alicyclic diols) having 2 to 12 carbon atoms, such as ethylene glycol, 1,2-propanediol, 1,3-propanediol, 2,2-dimethyl-1,3-propanediol, 1,2-butanediol, 1,4-butanediol, neopentyl glycol, 1,5-pentanediol, 1,6-hexanediol, cyclohexanediol, 1,3-cyclohexanedimethanol, and 1,4-cyclohexanedimethanol. The aliphatic dicarboxylic acid is exemplified by saturated aliphatic dicarboxylic acids (including alicyclic dicarboxylic acids) having 2 to 12 carbon atoms, such as succinic acid, malonic acid, glutaric acid, adipic acid, pimelic acid, suberic acid, azelaic acid, sebacic acid, dodecanedioic acid, 1,3-cyclohexanedicarboxylic acid, and 1,4-cyclohexanedicarboxylic acid. In the polyester employing at least an aliphatic diol as the diol component and at least an aliphatic dicarboxylic acid as the dicarboxylic acid component, the diol component may include the aliphatic diol in a content of typically 80 percent by weight or more, preferably 90 percent by weight or more, and more preferably 95 percent by weight or more, of the entire diol component. The diol component may further include another type of diol, such as an aromatic diol, as the remainder. In this polyester employing at least an aliphatic diol as the diol component and at least an aliphatic dicarboxylic acid as the dicarboxylic acid component, the dicarboxylic acid component may include the aliphatic dicarboxylic acid in a content of typically 20 percent by weight or more, preferably 30 percent by weight or more, and more preferably 50 percent by weight or more, of the entire dicarboxylic acid component. The dicarboxylic acid component may further include another type of dicarboxylic acid, such as an aromatic dicarboxylic acid (e.g., terephthalic acid). The aliphatic hydroxycarboxylic acid having 4 or more carbon atoms is exemplified by hydroxycarboxylic acids having 4 to 12 carbon atoms, such as hydroxybutyric acid, hydroxyvaleric acid, hydroxypentanoic acid, hydroxyhexanoic acid, hydroxydecanoic acid, and hydroxydodecanoic acid. The flexible aliphatic polyester (c) (aliphatic polyester and/or aliphatic-aromatic copolyester) has a weight-average molecular weight of typically from 5x 10⁴ to 40x 10⁴ and preferably from 8x 10⁴ to 25x 10⁴.

The flexible aliphatic polyester (c) is typified by poly(butylene succinate)s, poly(butylene succinate adipate)s, poly(ethylene succinate)s, poly(ethylene succinate adipate)s, poly(butylene adipate terephthalate)s, poly(butylene sebacate terephthalate)s, and polyhydroxyalkanoates.

The flexible aliphatic polyester (c) may be available as a commercial product. Typically, a product under the trade name "GS Pla AZ91T" is available from Mitsubishi Chemical Corporation as a poly(butylene succinate); a product under the trade name "GS Pla AD92W" is available from Mitsubishi Chemical Corporation as a poly(butylene succinate adipate); and a product under the trade name "Ecoflex" is available from BASF Japan Ltd. as a poly(butylene adipate terephthalate).

From the viewpoint of effective improvement in tear resistance, the poly(lactic acid) substrate may contain the tear-resistance improver(s) in a content (total amount) of generally 1 part by weight or more, preferably 1.5 parts by weight or more, and more preferably 2 parts by weight or more, per 100 parts by weight of the poly(lactic acid). The tear-resistance improver, if contained in an excessively high content, may readily cause the poly(lactic acid) substrate to suffer from a lower degree of crystallinity and a lower crystallization rate and to have insufficient thermal stability and/or may bleed out. To prevent this, the poly(lactic acid) film or sheet may contain the tear-resistance improver(s) in a content (total amount) of preferably 30 parts by weight or less, more preferably 25 parts by weight or less, furthermore preferably 20 parts by weight or less, and particularly preferably 15 parts by weight or less, per 100 parts by weight of the poly(lactic acid).

The content of the polyglycerol fatty acid ester or polyglycerol-condensed hydroxy fatty acid ester (a), or the core-shell polymer (b) including a particulate rubber and a graft layer lying outside the particulate rubber, when used as the tear-resistance improver, is generally 1 part by weight or more, preferably 1.5 parts by weight or more, and more preferably 2 parts by weight or more, per 100 parts by weight of the poly(lactic acid). From the above viewpoint, the content is preferably 20 parts by weight or less, more preferably 15 parts by weight or less, furthermore preferably 12 parts by weight or less, and particularly preferably 10 parts by weight or less. The content of the flexible aliphatic polyester (c), when used as the tear-resistance improver, is generally 5 parts by weight or more and preferably 10 parts by weight or more, per 100 parts by weight of the poly(lactic acid). From the above viewpoint, the content is preferably 30 parts by weight or less, more preferably 25 parts by weight or less, and furthermore preferably 20 parts by weight or less.

The tear-resistance improver, when contained in the poly(lactic acid) substrate, can help the poly(lactic acid) substrate (and the release liner) to have better tear strength. For example, this allows the poly(lactic acid) substrate (and the release liner using the same) to have a tear strength of 2.5 N/mm or more both in a machine direction (MD) and in a transverse direction (TD). A poly(lactic acid) substrate having such a tear strength, when used as a substrate of a release liner, does not suffer from rupture and tearing even in a process where a tension is applied upon production or working (processing) of the the poly(lactic acid) substrate and the release liner. The resulting release liner does not suffer from rupture and tearing even when it is wound as a roll or subjected to working such as punching.

The tear strength may be measured with a tear strength tester according to "Paper-Determination of tearing resistance-Elmendorf tearing tester method" prescribed in JIS P 8116. A poly(lactic acid) substrate having a tear strength of 2.5 N/mm or more both in the machine direction (MD) and in the transverse direction (TD) does not suffer from rupture and tearing not only upon the production of the poly(lactic acid) substrate and the release liner but also upon winding into a roll and upon working, as mentioned above. This enables the poly(lactic acid) substrate and the release liner to be subjected to working of various kinds and to be applied to a dramatically widened range.

The substrate (and the release liner) may have a tear strength of preferably 2.8 N/mm or more and more preferably 3.2 N/mm or more both in the machine direction (MD) and in the transverse direction (TD). The higher the tear strength is, the better. Though not critical, the upper limit of the tear strength may be typically 30 N/mm or less, or 20 N/mm or less, or generally 15 N/mm or less.

The crystallization promoter is exemplified by a fluorine-containing polymer, a poly(melamine phosphate), melamine cyanurate, zinc phenylphosphonate, calcium phenylphosphonate, magnesium phenylphosphonate, talc, and clay. Each of them may be used alone or in combination. Among them, a fluorine-containing polymer and/or zinc phenylphosphonate is preferred.

The fluorine-containing polymer is exemplified by tetrafluoroethylene polymers such as polytetrafluoroethylenes, perfluoroalkoxyalkanes (copolymers between tetrafluoroethylene and a perfluoroalkyl vinyl ether), perfluoroethylene-propene copolymers (copolymers between tetrafluoroethylene and hexafluoropropylene), ethylene-tetrafluoroethylene copolymers, tetrafluoroethylene-perfluorodioxole copolymers, and acrylic-modified polytetrafluoroethylenes; polychlorotrifluoroethylenes; poly(vinylidene fluoride)s; and poly(vinyl fluoride)s. Among them, tetrafluoroethylene polymers are preferred. Though not critical, the fluorine-containing polymer may have a weight-average molecular weight of generally from 100x 10⁴ to 1000x 10⁴ and preferably from 200x 10⁴ to 800x 10⁴.

The poly(lactic acid) substrate may contain the crystallization promoter in a content of typically from 0.1 to 30 parts by weight and preferably from 0.3 to 20 parts by weight, per 100 parts by weight of the poly(lactic acid). The content of a fluorine-containing polymer, when used as the crystallization promoter, is typically from 0.5 to 15 parts by weight and preferably from 0.7 to 10 parts by weight, per 100 parts by weight of the poly(lactic acid). The content of zinc phenylphosphonate, when used as the crystallization promoter, is typically from 0.1 to 15 parts by weight and preferably from 0.1 to 5 parts by weight, per 100 parts by weight of the poly(lactic acid).

The lubricant to give roll lubricity is exemplified by an olefinic polymer modified with an acidic functional group. The acidic functional group of the olefinic polymer modified with an acidic functional group is exemplified by carboxyl group and derivative groups derived therefrom. The derivative groups derived from carboxyl group are groups chemically derived from carboxyl group and are exemplified by, of carboxylic acids, acid anhydride groups, ester groups, amido groups, imido groups, and cyano groups. Among them, carboxylic acid anhydride groups are preferred.

The olefinic polymer modified with an acidic functional group may be obtained typically by grafting an unsaturated compound containing the "acidic functional group" (hereinafter briefly referred to as an "acidic-functional-group-containing unsaturated compound") to an unmodified olefinic polymer.

The unmodified olefinic polymer is exemplified by polypropylenes, propylene/α-olefin copolymers, low-density polyethylenes, and oligomers of them. Of these, preferred are polypropylenes, propylene/α-olefin copolymers, and oligomers of them. The "oligomers" may be typified by those obtained from corresponding polymers through thermal decomposition and resulting molecular weight reduction. Such oligomers are also available by polymerization.

The acidic-functional-group-containing unsaturated compound is exemplified by carboxyl-containing unsaturated compounds, and compounds containing a group derived from carboxyl group. The carboxyl-containing unsaturated compounds are exemplified by maleic acid, itaconic acid, chloroitaconic acid, chloromaleic acid, citraconic acid, and (meth)acrylic acid. The compounds containing a group derived from carboxyl group are exemplified by unsaturated compounds containing a carboxylic acid anhydride group, such as maleic anhydride, itaconic anhydride, chloroitaconic anhydride, chloromaleic anhydride, and citraconic anhydride; (meth)acrylic esters such as methyl (meth)acrylate, glycidyl (meth)acrylate, and 2-hydroxyethyl (meth)acrylate; and (meth)acrylamide, maleimide, and (meth)acrylonitrile. Among them, carboxyl-containing unsaturated compounds and unsaturated compounds containing a carboxylic acid anhydride group are preferred; of which unsaturated compounds containing an acid anhydride group are more preferred, and maleic anhydride is particularly preferred.

The olefinic polymer modified with an acidic functional group has a weight-average molecular weight of typically from 10000 to 80000, preferably from 15000 to 70000, and more preferably from 20000 to 60000. The olefinic polymer modified with an acidic functional group has an acid value of generally from 10 to 70 mgKOH/g and preferably from 20 to 60 mgKOH/g.

The olefinic polymer modified with an acidic functional group may be obtained by reacting an unmodified olefinic polymer with an acidic-functional-group-containing unsaturated compound in the presence of an organic peroxide. The organic peroxide can be one generally used as an initiator in radical polymerization. The reaction can be performed by any of a solution process and a melt process.

Of olefinic polymers modified with an acidic functional group, polypropylenes modified with maleic anhydride are preferred.

The poly(lactic acid) substrate may contain the olefinic polymer modified with an acidic functional group in a content of typically from 0.1 to 10 parts by weight, preferably from 0.1 to 5 parts by weight, and particularly preferably from 0.3 to 3 parts by weight, per 100 parts by weight of the poly(lactic acid).

The poly(lactic acid) substrate for use herein may contain one or more additives. Such additives are exemplified by antioxidants, ultraviolet absorbers, plasticizers, stabilizers, releasing agents, surfactants, antistatic agents, colorants (e.g., pigments such as white pigments), drip inhibitors, flame retardants, hydrolysis inhibitors, blowing agents, and fillers.

The poly(lactic acid) substrate may contain such additives in a total content of typically from 0 to 30 percent by weight (e.g., from 0.01 to 30 percent by weight), preferably from 0 to 15 percent by weight (e.g., from 0.01 to 15 percent by weight), and more preferably from 0 to 10 percent by weight (e.g., from 0.01 to 10 percent by weight).

The poly(lactic acid) substrate may be produced typically by preparing a poly(lactic acid) and, where necessary, a suitable modifier and additives according to desired properties; dispersing the respective components to give a resin composition containing a poly(lactic acid); forming a film from the resin composition by an extrusion process (e.g., T-die process or tubular film process (inflation process)), or by calendering or polishing; and cooling and solidifying the film. The preparation of the resin composition may be performed with a continuous melt kneader such as twin-screw extruder; or a batch melt kneader such as press kneader, Banbury mixer, or roll kneader. Of these melt film formation processes, calendering or polishing is preferred, because the molten resin composition is passed through a space (gap) between two metal rolls to form a film having a desired thickness. The poly(lactic acid) substrate can also be produced typically by injection molding or compression molding instead of the above processes. The resulting film may be further subjected to uniaxial stretching or biaxial stretching.

The poly(lactic acid) substrate may be subjected to a surface treatment (e.g., corona discharge treatment) and/or surface finishing (e.g., embossing) on a surface thereof.

The poly(lactic acid) substrate may have a thickness that is not critical, can be suitably selected, and is selectable from among the range of generally from 6 to 250 µm, and preferably from 25 to 150 µm.

### Undercoat Layer

The undercoat layer can be any layer, as long as being capable of preventing a curing-inhibiting component contained in the poly(lactic acid) substrate from migrating into the release-treated layer. The curing-inhibiting component inhibits the curing of the release agent and is exemplified by a surfactant. The undercoat layer is exemplified by resin layers of various kinds. Of resins to form the resin layers, polyester resins are preferred for satisfactory adhesion to the poly(lactic acid) substrate and effective prevention of the migration of the curing-inhibiting component.

The polyester resins are exemplified by polyester resins prepared by polycondensation of a polyol component and a polycarboxylic acid component; and polyester resins prepared by ring-opening polymerization of a lactone.

The polyol component may be any of dihydric alcohols or phenols; and trihydric or higher alcohols or phenols. The polyol component is exemplified by ethylene glycol, diethylene glycol, triethylene glycol, propylene glycol, dipropylene glycol, 1,3-propanediol, 1,3-butanediol, 1,4-butanediol, 2-methyl-1,3-propanediol, 1,5-pentanediol, neopentyl glycol, 1,6-hexanediol, 3-methyl-1,5-pentanediol, 2,4-diethyl-1,5-pentanediol, 1,9-nonanediol, 1,10-decanediol, glycerol, trimethylolpropane, trimethylolethane, pentaerythritol, cyclohexanediols (e.g., 1,4-cyclohexanediol), cyclohexanedimethanols (e.g., 1,4-cyclohexanedimethanol), bisphenols (e.g., bisphenol-A), and sugar alcohols (e.g., xylitol and sorbitol). Each of them may be used alone or in combination. Typically for satisfactory resin flexibility, the polyol component preferably contains a diol component (of which a dihydric alcohol is preferred) in a content of 70 mole percent or more of the entire polyol component.

The polycarboxylic acid component may be any of divalent or trivalent or higher carboxylic acids, and reactive derivatives of them. The reactive derivatives of carboxylic acids are exemplified by derivatives generally used in polyester production, such as carboxylic acid esters (e.g., C₁₋₄ alkyl esters such as methyl esters and ethyl esters) and acid anhydrides. The polycarboxylic acid component is exemplified by aliphatic polycarboxylic acids or reactive derivatives of them (e.g., acid anhydrides and C₁₋₄ alkyl esters), such as malonic acid, maleic acid, succinic acid, glutaric acid, adipic acid, suberic acid, azelaic acid, sebacic acid, dodecanedicarboxylic acid, maleic anhydride, and succinic anhydride; alicyclic dicarboxylic acids or reactive derivatives of them (e.g., acid anhydrides and C₁₋₄ alkyl esters), such as 1,4-cyclohexanedicarboxylic acid and hexahydrophthalic anhydride; and aromatic polycarboxylic acids or reactive derivatives of them (e.g., acid anhydrides and C₁₋₄ alkyl esters), such as terephthalic acid, isophthalic acid, orthophthalic acid, 2,6-naphthalenedicarboxylic acid, p-phenylenedicarboxylic acid, trimellitic acid, pyromellitic acid, phthalic anhydride, trimellitic anhydride, and pyromellitic anhydride. Each of different polycarboxylic acid components may be used alone or in combination. Typically for satisfactory resin thermal stability, the polycarboxylic acid component preferably contains an aromatic polycarboxylic acid (of which an aromatic dicarboxylic acid is preferred) or a reactive derivative thereof in a content of 50 mole percent or more of the entire polycarboxylic acid component.

The lactone is exemplified by propiolactone, β-methyl-δ-valerolactone, and ε-caprolactone.

The undercoat layer may generally be formed by dissolving the polyester resin or another resin in a solvent to give a resin solution (undercoating agent solution), applying the resin solution onto the poly(lactic acid) substrate surface, and drying the applied layer.

The solvent can be any one, as long as capable of dissolving the resin therein and not adversely affecting the poly(lactic acid) substrate, and is exemplified by aromatic hydrocarbons such as toluene, xylenes, and Solvesso; esters such as methyl acetate, ethyl acetate, propyl acetate, isopropyl acetate, butyl acetate, amyl acetate, ethyl formate, methyl propionate, ethyl propionate, butyl propionate, methoxypropyl acetate, and 2-ethoxyethyl acetate; alcohols such as methanol, ethanol, 1-propanol, isopropyl alcohol, 1-butanol, 2-ethylhexanol, ethylene glycol, methoxypropanol, 2-ethoxyethanol, and 2-butoxyethanol; ketones such as acetone, methyl ethyl ketone, methyl isobutyl ketone, and cyclohexanone; and ethers such as diethyl ether, ethylene glycol dimethyl ether, tetrahydrofuran, and dioxane. Each of different solvents may be used alone or in combination.

The undercoating agent solution has a concentration of the resin (e.g., polyester resin) of typically from 2 to 70 percent by weight and preferably from 5 to 30 percent by weight. The undercoating agent solution, when having a resin concentration of less than 2 percent by weight, may cause the resin to be present in an excessively small mass of coating, and this may cause adhesion failure due to poor adhesion between the poly(lactic acid) substrate and the release-treated layer. The undercoating agent solution, if having a resin concentration of more than 70 percent by weight, may have an excessively high viscosity and readily have poor handleability and insufficient coating workability.

The undercoating agent solution may be applied onto the poly(lactic acid) substrate surface by any process that is not critical and may be performed using, for example, a coater such as Meyer bar, blade coater, air-knife coater, or roll coater; an extruder; or a printer.

The undercoat layer may be present in a mass of coating of typically from 0.1 to 5 g/m² and preferably from 0.3 to 3 g/m² in terms of solids content (resin content). The undercoat layer, if present in an excessively small mass of coating, may cause poor adhesion between the poly(lactic acid) substrate and the release-treated layer; and, if present in an excessively large mass of coating, may cause unevenness in thickness and/or higher cost. The undercoat layer has a thickness of typically from 0.1 to 5 µm and preferably from 0.3 to 3 µm.

The undercoating agent may also be available as a commercial product. The commercial product is exemplified by one available under the trade name "KF-AC350" from Arakawa Chemical Industries, Ltd.

### Release-treated Layer

A release agent for use herein to form the release-treated layer is not limited and is exemplified by silicone release agents, fluorine-containing release agents, long-chain alkyl release agents, and polyolefin release agents. Among them, silicone release agents are preferred, of which curable silicone release agents are particularly preferred from the viewpoints typically of releasability and coating workability. The curable silicone release agents can be any of curable silicone release agents such as ultraviolet-curable silicone release agents and thermosetting silicone release agents. Among them, ultraviolet-curable silicone release agents are preferred because the poly(lactic acid) substrate is generally not so thermally stable. Curing of such an ultraviolet-curable silicone release agent may be inhibited by an additive such as a surfactant in the substrate, as described above. The present invention, however, provides an undercoat layer between the substrate and the release-treated layer. This allows a curing reaction to proceed smoothly even when an ultraviolet-curable silicone release agent is used as the release agent and gives a release liner having superior adhesion between the release-treated layer and the substrate.

The ultraviolet-curable silicone release agent can be any silicone release agent capable of being cured upon the irradiation with an ultraviolet ray and can be selected from among those of any curing type (curing mechanism). The curing type of the silicone release agent is exemplified by a cationically polymerizable type that is cured by cationic polymerization; a radically polymerizable type that is cured by radical polymerization; a radically additionable type that is cured by radical addition polymerization; and a hydrosilylation-reactive type that is cured by hydrosilylation reaction. Of the curing types of the ultraviolet-curable silicone release agent, the cationically polymerizable type is preferred. Specifically, the ultraviolet-curable silicone release agent is preferably a cationically polymerizable ultraviolet-curable silicone release agent.

The cationically polymerizable ultraviolet-curable silicone release agent may generally employ one or more epoxy-functional silicone polymer components. The epoxy-functional silicone polymer components each include one or more types of epoxy-functional organic groups (cationically polymerizable groups) introduced in a principal chain polysiloxane component. The epoxy-functional organic groups may each be bonded to silicon atom in the principal chain or in a side chain of the polysiloxane component directly or through a divalent group. The divalent group is exemplified by divalent organic groups such as alkylene groups and alkyleneoxy groups. At least two epoxy-functional organic groups may be introduced in the principal chain polysiloxane component.

Specifically, an epoxy-functional organic group to be employed in the cationically polymerizable ultraviolet-curable silicone release agent is exemplified by glycidyl group, glycidoxy group (glycidyloxy group), 3,4-epoxycyclohexyl group, and 2,3-epoxycyclopentyl group.

Such an epoxy-functional silicone polymer component can be obtained typically by subjecting a polymethylhydrogensiloxane as a base polymer to an addition reaction with an olefinic epoxy monomer with a platinum compound or another catalyst. The olefinic epoxy monomer is exemplified by 4-vinylcyclohexene oxide, ally glycidyl ether, and 7-epoxy-1-octene. The epoxy-functional silicone polymer component may be any of linear and branched chain components, or may be a mixture of them.

The cationically polymerizable ultraviolet-curable silicone release agent may preferably employ an onium salt ultraviolet-cleavable initiator (onium salt photoinitiator) as an ultraviolet-cleavable initiator (photoinitiator). Each of different onium salt ultraviolet-cleavable initiators may be used alone or in combination.

The onium salt ultraviolet-cleavable initiator is exemplified by diaryliodonium salts, triarylsulfonium salts, triarylselenonium salts, tetraarylphosphonium salts, and aryldiazonium salts. Among them, diaryliodonium salts are preferred as the onium salt ultraviolet-cleavable initiator. Preferred exemplary onium salt ultraviolet-cleavable initiators further include ultraviolet-cleavable initiators containing an antimony atom (antimony ultraviolet-cleavable initiators); and ultraviolet-cleavable initiators containing a boron atom (boron ultraviolet-cleavable initiators). Among them, diaryliodonium salt ultraviolet-cleavable initiators containing an antimony atom; and diaryliodonium salt ultraviolet-cleavable initiators containing a boron atom are more preferred.

The cationically polymerizable ultraviolet-curable silicone release agent, when employed, may contain the onium salt ultraviolet-cleavable initiator in an amount in the range of typically from 0.1 to 8 parts by weight and preferably from 0.3 to 5 parts by weight, per 100 parts by weight of the epoxy-functional silicone polymer component, though the amount is not critical as long as being a catalytic amount.

The cationically polymerizable ultraviolet-curable silicone release agent may be used without a solvent, or as a solution of polymer components (e.g., the epoxy-functional silicone polymer component) in an organic solvent. The cationically polymerizable ultraviolet-curable silicone release agent may further suitably contain any of known or customary additives. The additives are exemplified by fillers, antistatic agents, antioxidants, plasticizers, and colorants (e.g., dyestuffs and pigments). The cationically polymerizable ultraviolet-curable silicone release agent may further contain a silicone resin component typically for the regulation of the peel strength.

The cationically polymerizable ultraviolet-curable silicone release agent may be available as a commercial product. Exemplary commercial products for use as the cationically polymerizable ultraviolet-curable silicone release agent include those available under the trade names "UV9315", "UV9430", "UV9300", "TPR6500", and "TPR6501" from Toshiba Silicone Co., Ltd.; the trade names "X-62-7622", "X-62-7629", "X-62-7655", "X-62-7600", "X-62-7660", and "X-62-7634A" from Shin-Etsu Chemical Co., Ltd.; and the trade names "Poly200", "Poly201", "RCA200", "RCA250", and "RCA251" from Arakawa Chemical Industries, Ltd.

To be applied satisfactorily on the undercoat layer, the release agent preferably has a suitable solution viscosity of from about 10 to about 2000 mPa•s at room temperature (e.g., from 20°C to 25°C, particularly at 23°C).

The release agent may be applied to the undercoat layer surface by any process not limited using, for example, a coater such as Meyer bar, blade coater, air-knife coater, or roll coater; an extruder; or a printer. After application, the release agent is cured typically by the application of heat or an ultraviolet ray according to the type of the release agent to form a release-treated layer.

The ultraviolet-curable silicone release agent, when used as the release agent, can be cured by ultraviolet irradiation using a known ultraviolet lamp. The ultraviolet lamp is exemplified by lamps using electrodes, such as highpressure mercury lamps, ozone-free lamps, and metal halide lamps; and electrode-less lamps such as microwave-excited lamps.

The release agent may be present (after curing) in a mass of coating of typically from about 0.01 to about 10 g/m², preferably from 0.05 to 5 g/m², and more preferably from 0.1 to 1 g/m². The release agent, if present in an excessively small mass of coating, may cause large variation in peel strength and induce practical disadvantages; and, if present in an excessively large mass of coating, may cause higher cost and economical disadvantages. The release-treated layer has a thickness of typically from about 0.01 to about 10 µm and preferably from about 0.05 to about 5 µm.

### EXAMPLES

The present invention will be illustrated in further detail with reference to several examples and comparative examples below, which are by no means intended to limit the scope of the invention.

### EXAMPLE 1

A product available under the trade name "TERRAMAC" (biaxially stretched poly(lactic acid) film, 35 µm thick) from UNITIKA LTD. was prepared as a substrate (poly(lactic acid) substrate) of a release liner.

A product available from Arakawa Chemical Industries, Ltd. under the trade name "KF-AC350" (polyester resin undercoating agent) was diluted with toluene and yielded an undercoating agent solution having a solids concentration of 5 percent by weight. The undercoating agent solution was applied to one side of the poly(lactic acid) substrate using a Meyer bar (No. 4) and dried at 40°C for one minute to form an undercoat layer having a mass of coating (in solids content) of 0.4 g/m² and a thickness of 0.4 µm.

Next, 100 parts by weight of a cationically polymerizable ultraviolet-curable silicone release agent (trade name "X-62-7600" supplied by Shin-Etsu Chemical Co., Ltd.) was mixed with 3 parts by weight of a cationic curing catalyst (trade name "CAT-7605" supplied by Shin-Etsu Chemical Co., Ltd.) and yielded a release agent composition. This was applied onto the undercoat layer using a printability tester (trade name "RI Tester" supplied by TESTER SANGYO CO., LTD.), irradiated with an ultraviolet ray (quantity of light: 100 mJ/cm²) from an ultraviolet lamp (supplied by Heraeus Noblelight Fusion UV Inc.) at an irradiance of 500 mW/cm² to form a release-treated layer having a thickness of 0.1 µm, and yielded a release liner.

The resulting release liner was rubbed by firmly rubbing the release-treated layer surface with an index finger to examine the adhesion between the poly(lactic acid) substrate and the release-treated layer. As a result, no peeling of the release-treated layer occurred at all.

### EXAMPLE 2

A release liner was produced by the procedure of Example 1, except for diluting a product available from Arakawa Chemical Industries, Ltd. under the trade name "KF-AC350" (polyester resin undercoating agent) with toluene to give an undercoating agent solution having a solids concentration of 30 percent by weight; and forming an undercoat layer using this solution. The undercoat layer had a mass of coating (in solids content) of 2.4 g/m² and a thickness of 2.5 µm.

The resulting release liner was rubbed by firmly rubbing the release-treated layer surface with an index finger to examine the adhesion between the poly(lactic acid) substrate and the release-treated layer. As a result, no peeling of the release-treated layer occurred at all.

### EXAMPLE 3

A release liner was produced by the procedure of Example 1, except for diluting a product available from Arakawa Chemical Industries, Ltd. under the trade name "KF-AC350" (polyester resin undercoating agent) with toluene to give an undercoating agent solution having a solids concentration of 50 percent by weight; and forming an undercoat layer using this solution. The undercoat layer had a mass of coating (in solids content) of 0.4 g/m² and a thickness of 0.4 µm.

The resulting release liner was rubbed by firmly rubbing the release-treated layer surface with an index finger to examine the adhesion between the poly(lactic acid) substrate and the release-treated layer. As a result, no peeling of the release-treated layer occurred at all.

### EXAMPLE 4

A release liner was produced by the procedure of Example 1, except for mixing 100 parts by weight of a cationically polymerizable ultraviolet-curable silicone release agent (trade name "UV-9300" supplied by Toshiba Silicone Co., Ltd.) with 3 parts by weight of a cationic curing catalyst (trade name "UV-9310C" supplied by Toshiba Silicone Co., Ltd.) to give a release agent composition; and forming a release-treated layer having a thickness of 0.1 µm using this composition.

The resulting release liner was rubbed by firmly rubbing the release-treated layer surface with an index finger to examine the adhesion between the poly(lactic acid) substrate and the release-treated layer. As a result, no peeling of the release-treated layer occurred at all.

### COMPARATIVE EXAMPLE 1

A release liner was produced by the procedure of Example 1, except for forming a release-treated layer directly on the poly(lactic acid) substrate surface without the formation of an undercoat layer.

The resulting release liner was rubbed by firmly rubbing the release-treated layer surface with an index finger to examine the adhesion between the poly(lactic acid) substrate and the release-treated layer. As a result, peeling of the release-treated layer occurred.

### Industrial Applicability

Release liners according to embodiments of the present invention include a poly(lactic acid) substrate and a release-treated layer. The release liners, even when employing an ultraviolet-curable silicone release agent as the release agent, less or not suffer from curing inhibition of the silicone release agent caused by a component contained in the poly(lactic acid) substrate. This allows the release-treated layer to exhibit satisfactory adhesion with the substrate. In an embodiment, the poly(lactic acid) substrate contains a modifier. This helps the poly(lactic acid) substrate to have one or more properties such as tear resistance, thermal stability, and slipperiness at higher levels while maintaining its inherent rigidity. The release liners can thereby have broad utility and are highly useful. The release liners according to the present invention are particularly useful typically as release films for adhesive face protection of pressure-sensitive adhesive tapes, pressure-sensitive adhesive sheets, labels, and other articles; and as mold releasing films.

## Claims

1. A release liner comprising a poly(lactic acid) substrate; a release-treated layer lying over at least one side of the substrate; and an undercoat layer lying between the release-treated layer and the substrate.

2. The release liner according to claim 1, wherein the undercoat layer is present in a mass of coating of from 0.1 to 5 g/m² in terms of solids content.

3. The release liner according to one of claims 1 and 2, wherein the poly(lactic acid) substrate comprises a modifier.

4. The release liner according to any one of claims 1 to 3, wherein the release-treated layer is formed from a release agent; and the release agent is an ultraviolet-curable silicone release agent.

5. The release liner according to claim 4, wherein the ultraviolet-curable silicone release agent comprises a cationically polymerizable ultraviolet-curable silicone release agent.

6. The release liner according to any one of claims 1 to 5, wherein the undercoat layer comprises a polyester resin layer.
